# EUROPEAN PATENT APPLICATION

(11) **EP 4 556 122 A1**
(43) Date of publication of application: **21.05.2025**
(21) Application number: 23209826.9
(22) Date of filing: 14.11.2023
(51) Int. Cl.: B04B 5/04, B04B 15/06

(54) **INSERT, CENTRIFUGE, AND ANALYTICAL INSTRUMENT**

(71) Applicant: Roche Diagnostics GmbH, 68305 Mannheim (DE); F. Hoffmann-La Roche AG, 4070 Basel (CH)
(72) Inventor: BAUER, Andreas, 68305 Mannheim (DE); HESS, Peter, 68305 Mannheim (DE); STEIN, Reiner, 68305 Mannheim (DE); THOME, Klaus, 68305 Mannheim (DE); GRÜN, Markus, 68305 Mannheim (DE); GRUBER, Benjamin, 68305 Mannheim (DE); ELENGICAL, John, 68305 Mannheim (DE)
(74) Representative: Patentanwälte Ruff, Wilhelm, Beier, Dauster & Partner mbB

(57) **Abstract**

The invention relates to an insert (1) being adapted to be removably inserted into a ring segment shaped gap (51) of a centrifuge (50), wherein the ring segment shaped gap (51) is formed between a rotor member (52) and a stator member (53) of the centrifuge (50), wherein the insert (1) is adapted to collect fluids centrifugally ejected from the rotor member (52).

## Description

The invention relates to an insert being adapted to be removably inserted into a ring segment shaped gap of a centrifuge. Furthermore, the invention relates to a centrifuge having such an insert as well as to an analytical instrument having such a centrifuge.

Commonly, centrifuges are used for processing samples, in particular within a laboratory environment. Therein, any excess or spillage of samples or other substances unintendedly contacting a rotor member of the centrifuge may be ejected radially off the rotor member when the centrifuge is operated and thus contaminate a stator member of the centrifuge.

It is an object of the present invention to provide an insert being adapted to be removably inserted into a ring segment shaped gap of a, in particular laboratory, centrifuge, to provide a centrifuge having such an insert, and to provide an analytical instrument comprising such a centrifuge so as to enable improved cleanability and/or to simplify decontamination.

This object is solved by the subject matter of the independent claims. Preferred embodiments are subject matter of the dependent claims.

An insert according to the invention is adapted to be removably inserted into a ring segment shaped gap of a centrifuge. Preferably, said centrifuge can be used in a laboratory environment. The centrifuge has a rotor member and a stator member. In between the rotor member and the stator member, the ring segment shaped gap is formed. In particular, the ring segment shaped gap encircles the rotor member and is encircled by the stator member. The ring segment shaped gap can be arranged radially further apart from a rotation axis of the rotor member than an outer circumference of the rotor member. The stator member can be arranged radially further apart from the rotation axis than the ring segment shaped gap. In the present context a "ring segment" can be a closed ring segment extending 360° around a circumferential direction or an open ring segment extending by less than 360° around its circumferential direction. The insert according to the invention is adapted to collect fluids, in particular sample spillage or sample excess, centrifugally ejected from the rotor member. Preferably, the fluid is or has a liquid. It goes without saying that the insert, additionally or alternatively, can be adapted to collect solids, for example particles or sediments suspended in a liquid or resulting from drying of such a suspension, centrifugally ejected from the rotor member. Thus, the insert can at least partially shield the stator member against any substance centrifugally ejected from the rotor member, in particular when the rotor member is spun around the rotation axis. Since the insert is adapted to be removably inserted into the ring segment shaped gap, the insert may be removed from the ring segment shaped gap after collection of fluids and/or solids centrifugally ejected from the rotor member. Thus, by removing the insert from the ring segment shaped gap, said fluids and/or solids collected by the insert can be removed from the centrifuge, in particular without any further need of cleaning and/or decontamination of the stator member and/or the ring segment shaped gap.

According to an embodiment of the invention, the insert has the shape of a ring segment. The insert may have the shape of a closed ring and may be adapted to be removably inserted into the ring segment shaped gap along a mounting direction, the mounting direction in particular running substantially parallel to the rotation axis. Preferably, the shape of a ring segment has a first ending and a second ending. In other words, the insert can have the shape of an open ring segment. In particular, the first ending and the second ending are arranged opposite one another along a circumferential direction of the insert. The first and the second ending can be arranged facing one another along the circumferential direction. In case the first ending and the second ending are facing one another along the circumferential direction, the ring segment shaped insert can extend more than 180° and less than 360° along the circumferential direction. Preferably, the ring segment shaped insert extends 200° to 300°, most preferably 220° to 280°, along the circumferential direction. The insert having the shape of an open ring segment can be particularly easily mounted within the ring segment shaped gap of the centrifuge. In particular, the insert of open ring shape can be removably inserted into the ring segment shape gap, tangentially and/or circumferentially.

According to another embodiment of the invention, the insert comprises at least two ring segments, in particular open or partial ring segments. Each of the ring segments extends partially along the circumferential direction of the insert. Preferably, all ring segments of the insert have an equal radian. All ring segments of the insert may comprise a polymer body of substantial similar or equal shape. Therein, the ring segments are detachably connected to one another. Thus, the insert can be inserted into the ring segment shaped gap and removed from the ring segment shaped gap in parts. In other words: The ring segments of the insert can be separately arranged and/or interconnected within the ring segment shaped gap one after another in order to insert the insert into the ring segment shaped gap.

According to another embodiment of the invention, the ring segments of the insert have complementary connecting contours for detachably connecting the ring segments to one another. The connecting contours can be of tongue-and-groove-type. The complementary contours can form a labyrinth seal of the insert. The labyrinth seal can hinder fluids collected by the insert from radially flowing or moving outwards through a seam between the connection contours, in particular onto the stator member.

According to another embodiment of the invention, the ring segments are detachably connected to one another by magnetic interaction. In this case, two circumferentially neighboring ring segments may have magnetic elements, respectively. At least one of said magnetic elements can be a permanent magnet. Another one of said magnetic elements can be a ferromagnetic element and/or made from a ferromagnetic material. The magnetic elements can be embedded in a material, in particular a polymer material, of the ring segments. Connection by magnetic interaction enables mounting the insert in parts with considerably low mounting forces.

When detachably connected to one another, a radial and/or axial and/or circumferential play may be present in between the ring segments.

According to another embodiment of the invention, the insert has a gutter portion forming a reservoir for centrifugally ejected fluid. Therein, the gutter portion at least partially extends along the circumferential direction of the insert. The gutter portion can extend along a circumferential extension of the insert, at least partially or completely. The gutter portion allows for particularly reliable collection and/or storage and/or guidance of fluids ejected from the rotor member. Preferably, the gutter portion and/or the reservoir formed by the gutter portion is opened against a direction of gravity when the insert is inserted into the radial gap. The reservoir formed by the gutter portion may be adapted for storing fluids collected by the insert. The gutter portion and/or the reservoir formed by the gutter portion may form a fluid channel for directing or guiding collected fluid towards the first ending and/or the second ending of the insert. At the first ending and/or second ending, the reservoir may be opened. Alternatively, the reservoir may be shut by a dam portion of the insert at the first ending and/or the second ending.

According to another embodiment of the invention, the insert has a groove for collecting ejected fluid, in particular liquid. The groove can be adapted to, in particular radially, catch fluid. Therein, the groove at least partially extends along the circumferential direction of the insert. The groove can extend along a circumferential extension of the insert, at least partially or completely. The groove may extend in parallel to the gutter portion. In particular, the groove may serve to avoid collected fluids from spilling along an axial direction when the fluids dynamically get into contact with the insert. The groove and/or the gutter portion may have a liquid absorber and/or liquid binder, for instance a porose element like a sponge or a paper or anything alike.

According to another embodiment of the invention, the groove has a central area extending along an axial direction of the insert. The axial direction of the insert may be parallel to the rotation axis of the centrifuge and/or to gravity when the insert is inserted into the ring segment shaped gap. The groove has two shoulder areas facing one another along the axial direction. The shoulder areas, in particular oppositely, merge into the central area, in particular along the axial direction. The central area can be arranged axially in between both the shoulder areas. The shoulder areas can prevent fluid radially impinging the central area from splashing along the axial direction.

According to another embodiment of the invention, the insert has two end faces arranged opposite one another along the axial direction of the insert. Therein, at least one of the end faces has a plurality of spacer portions. Each spacer portion protrudes along the axial direction. The spacer portions are spaced apart from one another along the circumferential direction. In particular, the spacer portions are arranged equidistantly along the circumferential direction, in particular at least within a specific ring segment of the insert. The spacer portions allow for particular precise positioning of the insert within the ring segment shaped gap, in particular along the axial direction.

According to another embodiment of the invention, the insert has engagement portions for detachably engaging with the stator member. The engagement portions can be arranged at a radial outer portion of the insert. The radial outer portion can radially face the stator member when the insert is inserted into the ring segment shaped gap. The engagement portions can form hooks, for example snap hooks, for holding the insert at the stator member. The engagement portions can protrude radially. The engagement portions may be configured for precisely defining a distance and/or a position of the insert relative to the stator member. Thus, the engaging portions may serve as spacing aid and/or positioning aid, in particular fulfilling a spacing function and/or a positioning function, respectively. In particular, the engagement portions are arranged at a first ending and a second ending of the insert having an open ring segment shape, respectively. Thus, at each of the first and the second ending one engagement portion may be present. The engagement portions may be configured to mechanically interact with the stator member in order to fasten the insert to the stator member, in particular along the circumferential direction and/or axially.

In particular, the insert may have a grip portion. The grip portion can benefit, in particular manual, handling of the insert. The grip portion may comprise a recess. In particular, grip portions are arranged at a first ending and a second ending of the insert having an open ring segment shape, respectively.

The centrifuge according to the invention is adapted for processing samples using sample processing devices. The sample can be a blood sample, in particular a human blood sample. Such a sample processing device can be configured for storing a sample to be processed by the centrifuge. For example, such a sample processing device can be a cartridge, a tube, a well, a cassette or alike. The centrifuge comprises a rotor member for carrying such processing devices. Furthermore, the centrifuge has a stator member relative to which the rotor member can be spun when centrifuging samples which are received by the sample processing devices. In particular, the rotor member can be spun relative to the stator member around a rotation axis of the centrifuge. Therein, a ring segment shaped gap of the centrifuge is formed in between the rotor member and the stator member. In particular, the ring segment shaped gap is formed radially in between the rotor member and the stator member. The centrifuge furthermore comprises an insert according to the invention as described above. Therein, the insert is removably inserted into the ring segment shaped gap. The afore-mentioned advantages of the insert according to the invention transfer to the centrifuge according to the invention having such an insert.

According to an embodiment of the invention, the centrifuge has a housing which at least partially covers the ring segment shaped gap. Therein, the housing comprises an opening for access of the rotor member and the insert. The opening may allow access to the rotor member and at least a portion of the ring segment shaped gap. The opening may extend along the circumferential direction of the insert, in particular along a missing part or open portion of the insert. The centrifuge may comprise a lid for closing the opening of the housing. The centrifuge may be a single or stand-alone device, for example for placement on top of a table. Alternatively, the centrifuge can be a module for a subordinate system or device.

The insert may be adapted to be magnetically fastened to the stator member. Therefore, the insert may have a number of ferromagnetic elements and the stator member may have a, in particular corresponding, number of permanent-magnetic elements, or vice versa. Each ferromagnetic element may comprise a ferromagnetic material, in particular containing or being iron. Each ferromagnetic element may be of a plate-like shape. Each permanent-magnetic element may comprise one or more, for instance two, permanent magnets. The permanent-magnetic elements and/or the ferromagnetic elements may be shaped complementary to respective receiving portions of the insert and/or the stator member. The permanent-magnetic elements and/or the ferromagnetic elements may be adapted to be clipped into the respective receiving portion.

The stator member may comprise a hall-sensor and the insert may comprise a, in particular further, permanent-magnetic element for triggering the hall-sensor, thus allowing for verification of correct placement of the insert. The permanent-magnetic element for triggering the hall-sensor may be received in a blind hole of the insert. The blind hole may extend axially. The permanent-magnetic element for triggering the hall-sensor may be fixed in the blind hole with a glue, in particular a UV-hardening glue. Alternatively, the permanent-magnetic element for triggering the hall-sensor may be force or form fit into the blind hole. A further option would be to thermally deform the blind hole opening after insertion of the permanent-magnetic element for triggering the hall-sensor. In a further embodiment, the insert may comprise a cap for closing the blind hole after the permanent-magnetic element for triggering the hall-sensor was accepted by the blind hole. The cap may secure the permanent-magnetic element inside the blind hole. When the insert is placed within the ring-shaped gap, the hall-sensor may be arranged at a distance to the blind hole, in particular axially.

The stator member and the insert may have complementary stop-portions. The stop-portions can aid with correct placement of the insert with respect to the stator member. In particular, stop-portions may be arranged at a first ending and a second ending of the insert having an open ring segment shape, respectively. The stop portions of the insert may be formed by and/or at the engagement portions of the insert. The stop portions may define the circumferential position of the ring segments and the play at the labyrinth sealing to allow a defined circumferential positioning of the ring segments. The stop portions may assure that the labyrinth sealing is closed but that the ring segments do not touch each other at their front surfaces facing each other, in particular so that the front surfaces do not abut each other.

The analytical instrument according to the invention can be a subordinate system or device. The analytical instrument comprises a centrifuge according to the invention as described above. The analytical instrument can be a laboratory instrument or a diagnostic instrument. The centrifuge can be a module of the analytical instrument. The afore-mentioned advantages of the centrifuge according to the invention transfer to the analytical instrument according to the invention comprising such a centrifuge. The analytical instrument has a measuring unit for analyzing samples centrifuged by the centrifuge. In particular, the measuring unit is adapted for optically analyzing the samples centrifuged by the centrifuge.

According to an embodiment of the invention, the measurement unit of the analytical instrument and the centrifuge of the analytical instrument are placed in a common housing. The common housing can delimit a measuring chamber within which the samples can be processed by the centrifuge and analyzed by the measuring unit. The common housing can be the housing of the centrifuge. The common housing can protect and/or shield the measurement chamber from environmental influences, said influences can lead to contamination of the samples to be processed.

Further advantages and features of the invention arise from the claims as well as from the following description of a preferred embodiment of the invention, which is depicted by the drawings. Therein, equal reference signs relate to equal or similar or functionally equal components.

It is to be understood that the features mentioned above as well as the features described below are not only usable in the stated combination, respectively, but also in other combinations or solely, without leaving the scope of the present invention.
- Fig. 1: in a perspective view, schematically depicts an embodiment of an analytical instrument according to the invention having an embodiment of a centrifuge according to the invention, the latter having an embodiment of an insert according to the invention,
- fig. 2: schematically illustrates the centrifuge of fig. 1 in a perspective close-up,
- fig. 3: schematically depicts the insert of fig. 1 in a perspective view,
- fig. 4: schematically depicts a detail of the insert according to fig. 3 in a perspective view,
- fig. 5: schematically illustrates a connecting contour of a ring segment of the insert according to figs. 3 and 4 in a perspective view,

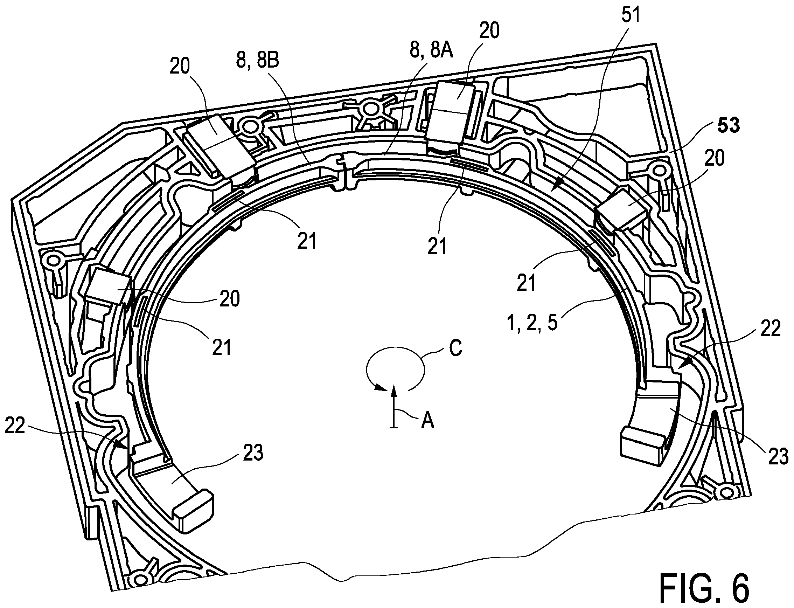

- fig. 6: in a perspective view, schematically illustrates another embodiment of a centrifuge according to the invention, the latter having another embodiment of an insert according to the invention,
- fig. 7: schematically illustrates the centrifuge of fig. 6 in another perspective view,
- fig. 8: schematically illustrates a detail of the centrifuge of fig. 6 in another perspective view,
- fig. 9: schematically illustrates the insert of the centrifuge of fig. 6 in conjunction with permanent magnets for the centrifuge fig. 6,

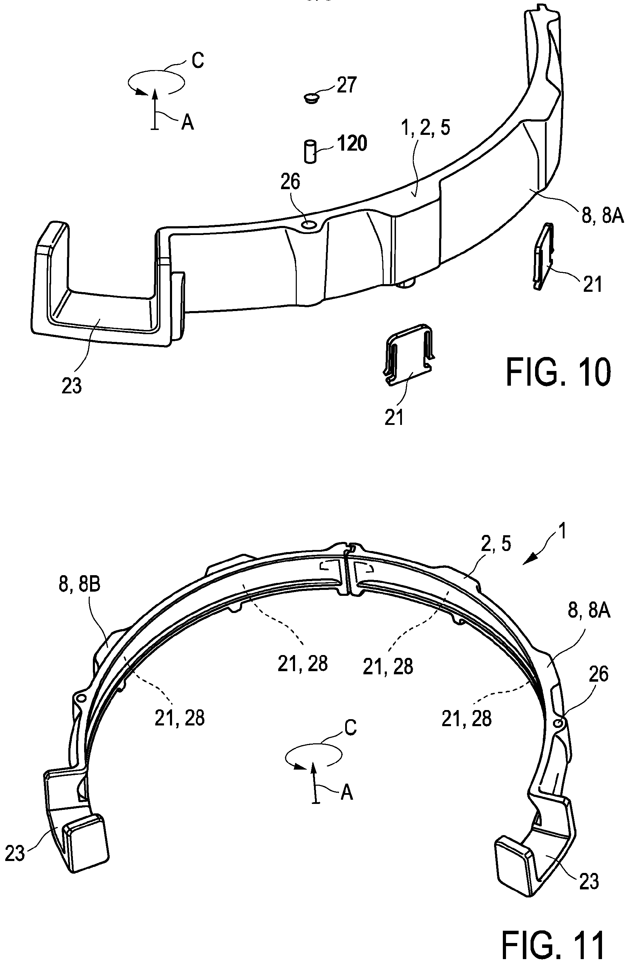

- fig. 10: schematically illustrates a ring segment of the insert of fig. 9 in a perspective exploded view,
- fig. 11: schematically illustrates the insert of fig 9 in another perspective view,

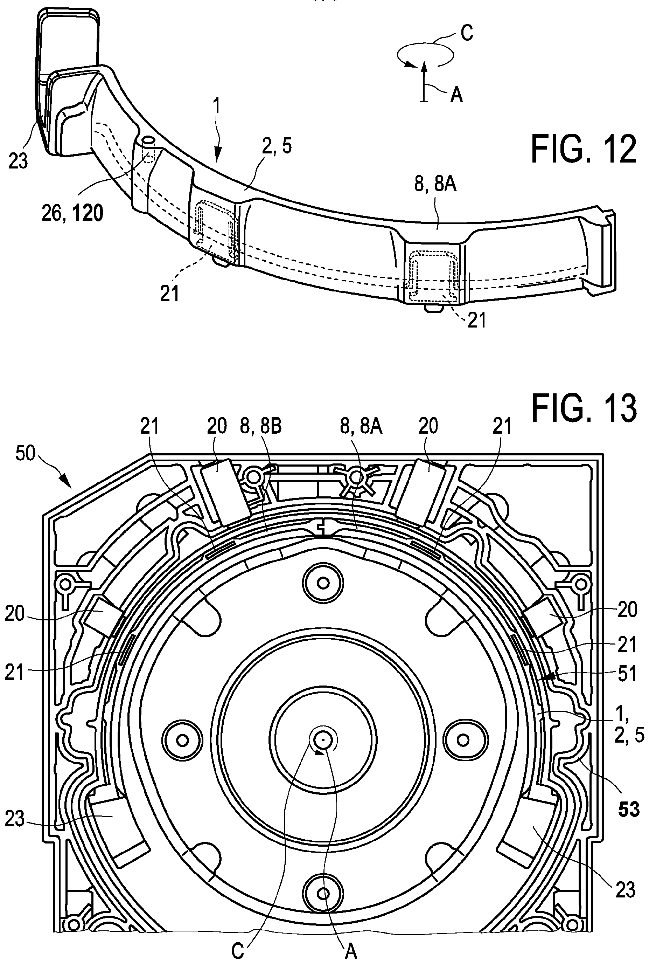

- fig. 12: schematically illustrates the ring segment of fig. 10 in a wireframe-like perspective view, and
- fig. 13: schematically illustrates the centrifuge of fig 6 in a top view.

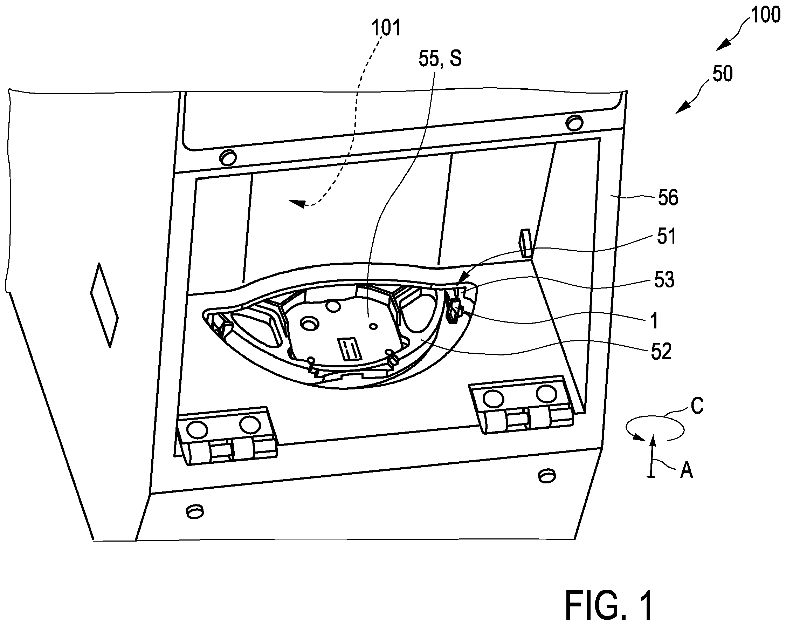

A centrifuge 50 is adapted for processing samples S using sample processing devices 55. Such a sample may be a blood sample, for instance a human blood sample. The centrifuge 50, for example, is a module of a superordinate analytical instrument 100. Therein, the analytical instrument 100 comprises a measuring unit 101 for, in particular optically, analyzing samples S centrifuged by the centrifuge 50. Whereas, according to the embodiment of fig. 1, the centrifuge 50 is modularly comprised by the analytical instrument 100, the centrifuge 50 may be a stand-alone device in other embodiments. Such a stand-alone device centrifuge 50 can be placed on top of a laboratory table or have its own rack or frame for standing on a laboratory floor.

The centrifuge 50 - both the centrifuge 50 module of the figures and the stand-alone centrifuge 50 of alternative embodiments - comprises a rotor member 52. The rotor member 52 is adapted to carry sample processing devices 55. Such a sample processing device 55 can be a cartridge, a tube, a well or a cassette. The sample processing device 55 can contain a portion of a sample S. The centrifuge 50 has a stator member 53. The rotor member 52 can be spun relative to the stator member 53 when samples S received by the sample processing devices 55 are centrifuged. The centrifuge 50 can have a driving device that can drive the rotor member 52 for centrifuging the samples S. A ring segment shaped gap 51 of the centrifuge 50 is formed in between the rotor member 52 and the stator member 53. For example, the ring segment shaped gap 51 is arranged radially in between the rotor member 52 and the stator member 53. The term "radial" can relate to an axial direction A extending in parallel to a rotation axis around which the rotor member 52 can be spun relative to the stator member 53. The centrifuge 50 furthermore comprises an insert 1. Therein, the insert 1 is removably inserted into the ring segment shaped gap 51 of the centrifuge 50. Thus, the ring segment shaped gap 51 can be at least partially filled by the insert 1.

In the example of fig. 1, a housing 56 of the centrifuge 50 forms a common housing 56 of the analytical instrument 100. The measuring unit 101 and the centrifuge 50 of the analytical instrument 100 are placed within the common housing 56. The housing 56 partially covers the ring segment shaped gap 51. The housing 56 comprises an opening for access of the rotor member 52 and the insert 1. A portion of the ring segment shaped gap 51 can be accessed via the opening. The opening can have a sickle-shaped circumference. The opening can have a size allowing for sample processing devices 55 to pass through in order to be placed at the rotor member 52 or to be taken off the rotor member 52.

The insert 1 is adapted to be removably inserted into the ring segment shaped gap 51. Therein, the insert 1 is adapted to collect a substance, in particular fluids and/or solids, which are centrifugally ejected from the rotor member 52. For example, the insert 1 can allow for collection of substances centrifugally thrown off the rotor member 52 when the rotor member 52 is spun relative to the stator member 53.

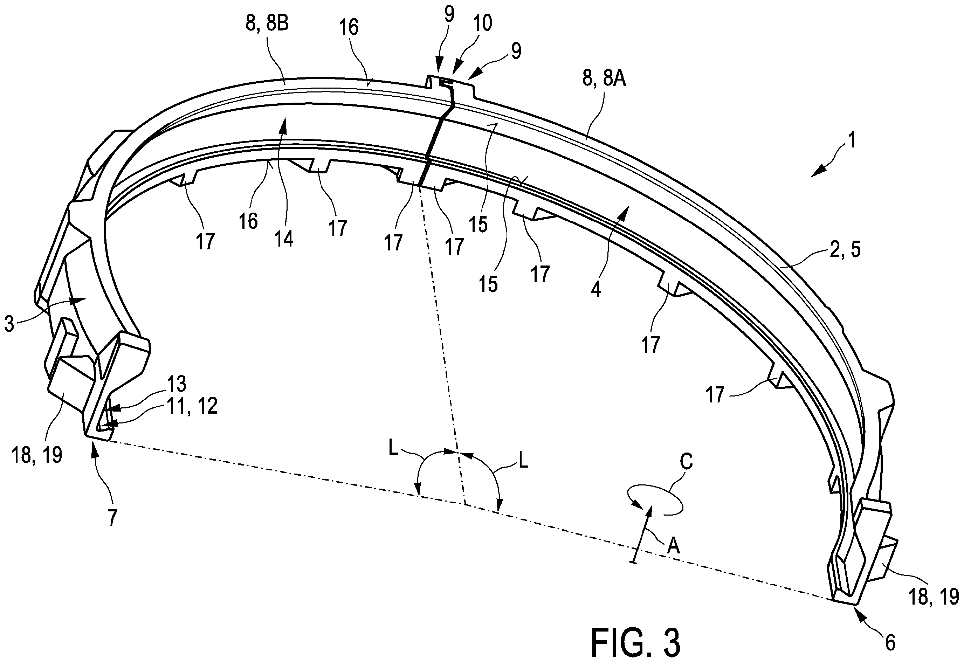

As best to be seen from fig. 3, the insert 1 can have the shape of an open ring segment 5 having a first ending 6 and a second ending 7. Therein, the first ending 6 and the second ending 7 are arranged opposite one another along a circumferential direction C of the insert 1. The circumferential direction C can run around the rotation axis of the centrifuge 50, in particular within a plane oriented perpendicular to the axial direction A. The circumferential direction C may run within a horizontal plane when the insert 1 is inserted into the ring segment shaped gap 51. The rotation axis can be parallel to gravity. The axial direction A can be parallel to gravity when the insert 1 is inserted into the ring segment shaped gap 51. The axial direction A can be oriented or point against gravity.

For example, the insert 1 has at least two ring segments 8, 8A, 8B. In the embodiment shown in the figures, the insert 1 has exactly two ring segments 8, 8A, 8B. Each of the ring segments 8, 8A, 8B extends partially along the circumferential direction C of the insert 1. Therein, all ring segments 8, 8A, 8B can have an equal radian L. According to fig. 3 both ring segments 8A, 8B have a radian L between π/2 and 2π/3. The ring segments 8, 8A, 8B are detachably connected to one another.

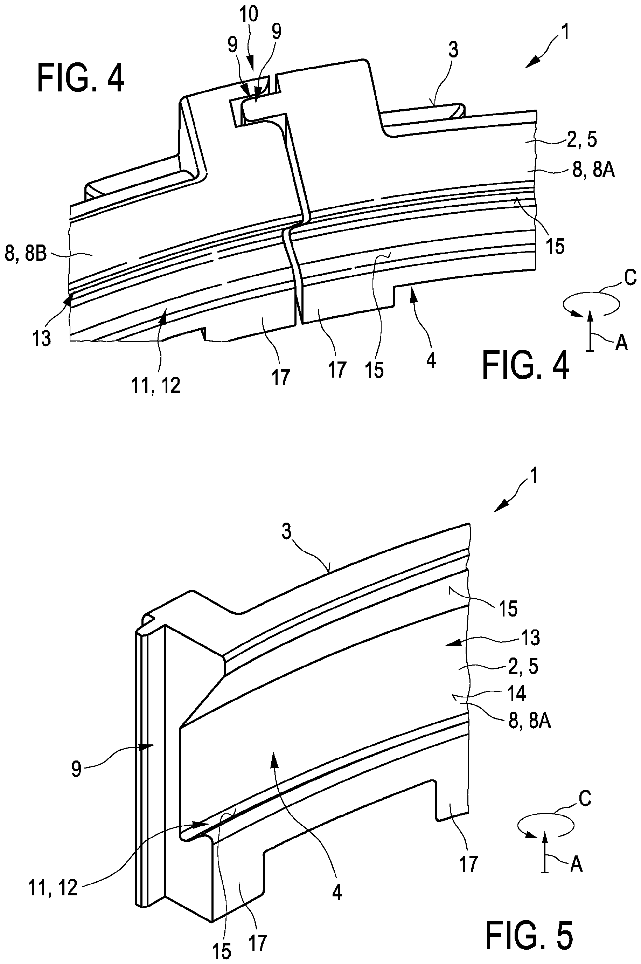

For instance, the ring segments 8, 8A, 8B have complementary connecting contours 9, respectively. The complementary connecting contours 9 can be of tongue-and-groove-type. As to be seen from figs. 3 to 5, the ring segment 8B has a connecting contour 9 in the shape of a groove, whereas the connecting contour 9 of the circumferentially neighboring ring segment 8A has the shape of a tongue. The complementary connecting contours 9 are adapted for detachably connecting the ring segments 8, 8A, 8B to one another. The complementary contours 9, in particular in their connected state, can form a labyrinth seal 10 of the insert 1.

According to the embodiment shown in the figures, the insert 1 has a gutter portion 11. The gutter portion 11 forms a reservoir 12 for ejected fluid, in particular for fluid ejected radially off the rotor member 52 due to centrifuging. The gutter portion 11 extends at least partially along the circumferential direction C of the insert 1. The gutter portion 11 can be opened along the axial direction A. When the insert 1 is inserted into the ring segment shaped gap 51, the gutter portion 11 can be opened against gravity, in particular upwards. The insert 1 has a groove 13 for collecting ejected fluid. Therein, the groove 13 at least partially extends along the circumferential direction C of the insert 1. The groove 13 can be recessed radially. For example, the groove 13 has a central area 14 which extends along the axial direction A of the insert 1. The groove 13 can have two shoulder areas 15 facing one another along the axial direction and contrarily merging into the central area 14. The gutter portion 11 can be arranged at one of said shoulder areas 15. One of the two shoulder areas 15, in particular the shoulder area 15 arranged opposite the gutter portion 11, can be chamfered. The chamfered shoulder area 15 can be conical. In a cross-section perpendicular to the circumferential direction C and/or along the axial direction A, the chamfered shoulder area 15 can be tilted against the central area 14 by an obtuse angle, for example in between 110° and 160°. The obtuse angle can be opened toward the rotation axis, in particular inwards.

For example, the insert 1 has two end faces 16 arranged opposite one another along the axial direction A of the insert 1. When the insert 1 is inserted into the ring segment shaped gap 51, one of the end faces 16 may be a top end face 16 and the other one of the two end faces 16 may be a bottom end face 16 of the insert 1. Therein, at least one of the end faces 16, in particular the bottom end face 16, has a plurality of spacer portions 17. The spacer portions 17 protrude along the axial direction A. The spacer portions 17 are spaced apart from one another along the circumferential direction C. Presently, each ring segment 8, 8A, 8B has several spacer portions 17. The spacer portions 17 of each of the ring segments 8, 8A, 8B are arranged equidistantly.

According to the figures, the insert 1 has a radial outer portion 3. The insert 1 can have an annular body 2. The stator member 53 may have an inner circumference 54. The annular body 2 can contact the inner circumference 54. The radial outer portion 3 faces the stator member 53 when the insert 1 is received by the ring segment shaped gap 51. The radial outer portion 3 may be arranged radially opposite a radial inner portion 4 of the insert 1. The insert 1 has engagement portions 18. The engagement portions 18 can be present at the radial outer portion 3. The engagement portions 18 can form hooks 19. The engagement portions 18 are adapted for detachably engaging with the stator member 53. In particular, the engagement portions 18 can form spacing aids and/or positioning aids of the insert 1 in order to enable particularly reproducible positioning of the insert 1 relative to the stator member 53. The engagement portions 18 can be arranged at the first ending 6 and the second ending 7 of the insert 1, respectively. The first ending 6 and/or the second ending 7 - as well as the engagement portions 18 arranged thereat - can be accessible through the opening of the housing 56, in particular if a lid of the centrifuge 50 or of the analytical instrument 100 is opened.

A radial and/or axial and/or circumferential play 24 may be present in between the ring segments 8, 8A, 8B being detachably connected to one another. In particular, the overlap formed at the labyrinth seal 10 may be subject to said radial and/or axial and/or circumferential play 24.

The insert 1, in particular at least one ring segment 8A, 8B of the insert 1, may have a grip portion 23. The grip portion 23 can benefit, in particular manual, handling of the insert 1 and/or the respective ring segment 8, 8A, 8B. The grip portion 23 may comprise a recess.

The insert 1 may be adapted to be magnetically fastened to the stator member 53. Therefore, the insert 1 may have a number of ferromagnetic elements 21 and the stator member 53 may have a, in particular corresponding, number of permanent-magnetic elements 20, or vice versa. Each ferromagnetic element 21 may comprise a ferromagnetic material, in particular containing or being iron. Each ferromagnetic element 21 may be of a plate-like shape. Each permanent-magnetic element 20 may comprise one or more, for instance two, permanent magnets. The permanent-magnetic elements 20 and/or the ferromagnetic elements 21 may be shaped complementary to respective receiving portions 28 of the insert 1 and/or the stator member 53. The permanent-magnetic elements 20 and/or the ferromagnetic elements 21 may be adapted to be clipped into the respective receiving portion 28.

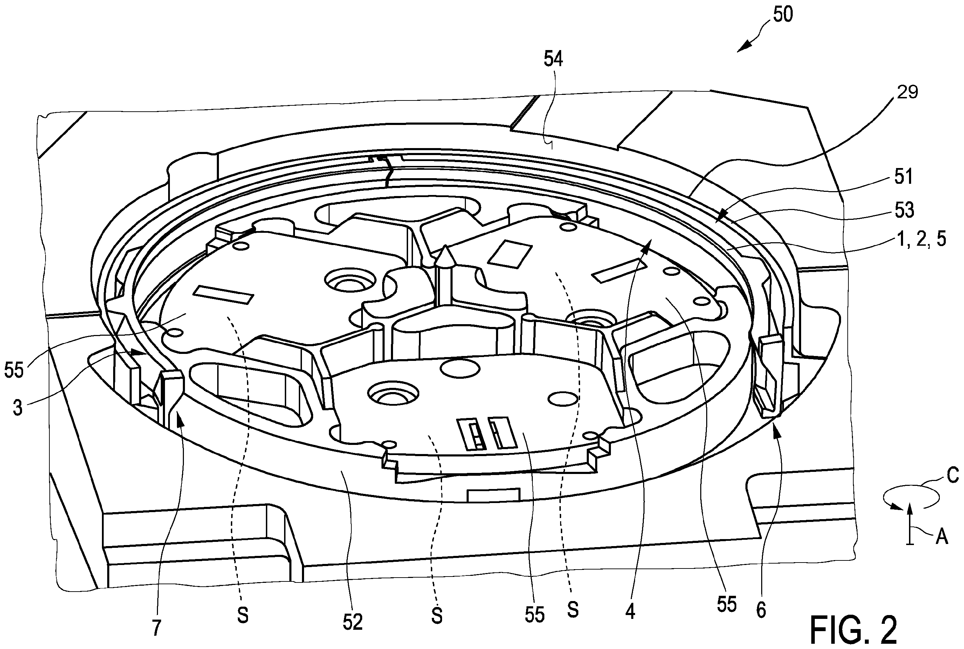

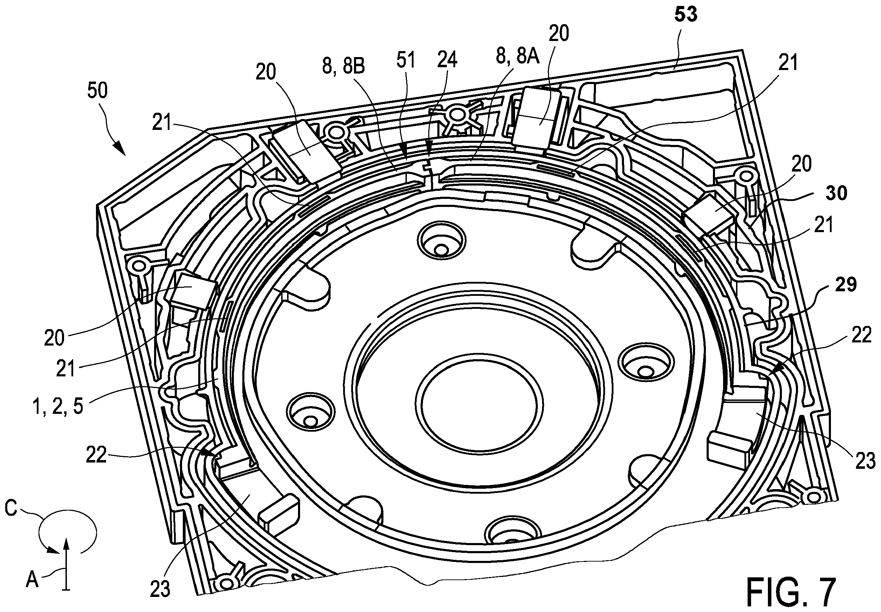

As best to be seen from figs. 2 and 7, the stator member 53 may comprise a collar portion 29 for radially supporting the insert 1. The collar portion 29 may be or comprise an aluminum die cast part. The permanent magnetic elements 20 may be attached to or placed in a plastic part 30 of the stator member 53 radially behind the collar portion 29, in particular with respect to the rotor member 52.

The stator member 53 may comprise a hall-sensor 25 and the insert 1 may comprise a further permanent-magnetic element 120 for triggering the hall-sensor 25, thus allowing for detection of correct placement of the insert 1. The further permanent-magnetic element 120 for triggering the hall-sensor 25 may be received in a blind hole 26 of the insert 1. The blind hole 26 may extend and/or open along the axial direction A. The insert 1 may comprise a cap 27 for closing the blind hole 26, in particular after the further permanent-magnetic element 120 for triggering the hall-sensor 25 was accepted by the blind hole 26. The cap 27 may secure the further permanent-magnetic element 120 inside the blind hole 26. When the insert 1 is placed within the ring-shaped gap 51, the hall-sensor 25 may be arranged at a distance to the blind hole 26, in particular axially. The hall sensor 25 is arranged such that the magnetic field of the further permanent-magnetic element 120 has free access to the hall-sensor 25.

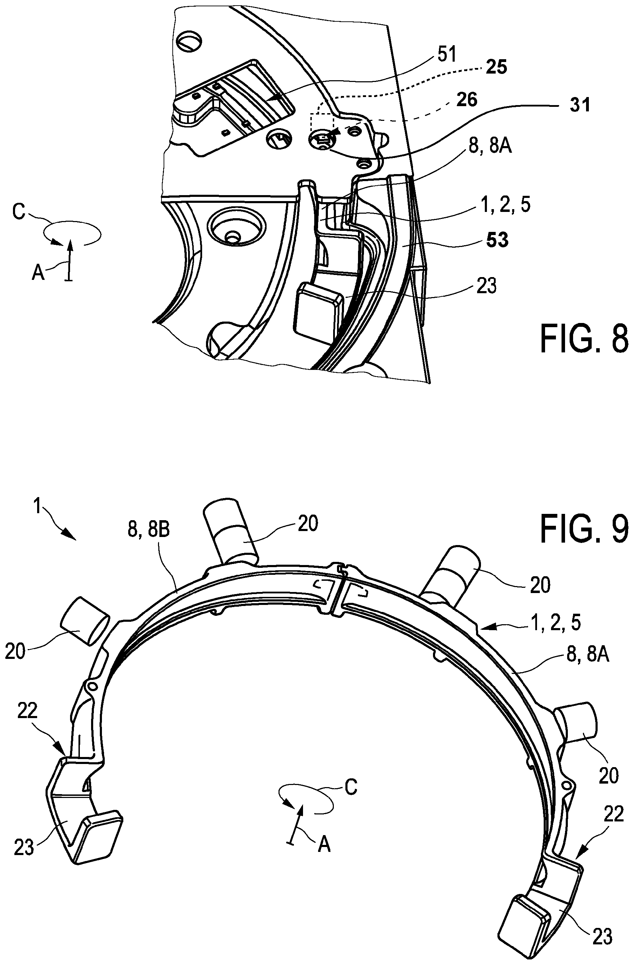

In the example of fig. 8, the blind hole 26 is covered by a sheet metal part of the stator member 53 with respect to a projection direction of the drawing of fig. 8. Therefore, a position of the blind hole 26 behind the sheet metal part is being indicated by a dashed arrow line. A position of the hall sensor 25 is highly schematically indicated by a dashed rectangle. It is to be recognized that the hall sensor 25 may be arranged above or at least partially within a hole 31 that is present at the afore-mentioned sheet metal part.

The stator member 53 and the insert 1 may have complementary stop-portions 22. The stop-portions 22 can aid with correct placement of the insert 1 with respect to the stator member 53.

## Claims

1. Insert (1) being adapted to be removably inserted into a ring segment shaped gap (51) of a centrifuge (50), wherein the ring segment shaped gap (51) is formed between a rotor member (52) and a stator member (53) of the centrifuge (50),
- wherein the insert (1) is adapted to collect fluids centrifugally ejected from the rotor member (52).

2. Insert (1) according to claim 1, **characterized in that**
- the insert (1) has the shape of a ring segment (5) having a first ending (6) and a second ending (7),
- wherein the first ending (6) and the second ending (7) are arranged opposite, in particular facing, one another along a circumferential direction (C) of the insert (1).

3. Insert (1) according to any of the preceding claims, **characterized in that**
- the insert (1) has at least two ring segments (8, 8A, 8B) each of which partially extends along a circumferential direction (C) of the insert (1), wherein in particular all ring segments (8, 8A, 8B) have an equal radian (L),
- wherein the ring segments (8, 8A, 8B) are detachably connected to one another.

4. Insert (1) according to claim 3, **characterized in that**
- the ring segments (8, 8A, 8B) have complementary connecting contours (9), in particular of tongue-and-groove-type, for detachably connecting the ring segments (8, 8A, 8B) to one another, wherein in particular the complementary connecting contours (9) form a labyrinth seal (10) of the insert (1).

5. Insert (1) according to claim 3 or 4, **characterized in that**
- the ring segments (8, 8A, 8B) are detachably connectable to one another by magnetic interaction.

6. Insert (1) according to any of the preceding claims, **characterized in that**
- the insert (1) has a gutter portion (11) forming a reservoir (12) for ejected fluid,
- wherein the gutter portion (11) at least partially extends along a circumferential direction (C) of the insert (1).

7. Insert (1) according to any of the preceding claims, **characterized in that**
- the insert (1) has a groove (13) for collecting ejected fluid,
- wherein the groove (13) at least partially extends along a circumferential direction (C) of the insert (1).

8. Insert (1) according to claim 7, **characterized in that**
- the groove (13) has a central area (14) extending along an axial direction (A) of the insert (1),
- wherein the groove (13) has two shoulder areas (15) facing one another along the axial direction (A) and merging into the central area (14).

9. Insert (1) according to any of the preceding claims, **characterized in that**
- the insert (1) has two end faces (16) arranged opposite one another along an axial direction (A) of the insert (1),
- wherein at least one of the end faces (16) has a plurality of spacer portions (17) protruding along the axial direction (A) and being spaced apart from one another along the circumferential direction (C), in particular equidistantly.

10. Insert (1) according to any of the preceding claims, **characterized in that**
- the insert (1), in particular at its radial outer portion (3), has engagement portions (18), in particular forming hooks (19), for detachably engaging with the stator member (53),
- wherein in particular the engagement portions (18) are arranged at a first ending (6) and at a second ending (7) of the insert (1), respectively.

11. Centrifuge (50) for processing samples (S) using sample processing devices (55), the centrifuge (50) comprising
- a rotor member (52) for carrying sample processing devices (55),
- a stator member (53) relative to which the rotor member (52) can be spun when centrifuging samples (S) which are received by the sample processing devices (55), wherein a ring segment shaped gap (51) is formed between the rotor member (52) and the stator member (53), and
- an insert (1) according to any of the preceding claims, wherein the insert (1) is removably inserted into the ring segment shaped gap (51).

12. Centrifuge (50) according to claim 11, **characterized in that**
- the centrifuge (50) comprises a housing (56) at least partially covering the ring segment shaped gap (51),
- wherein the housing (56) comprises an opening for access to the rotor member (52) and the insert (1).

13. Analytical instrument (100), wherein the analytical instrument (100) comprises
- a centrifuge (50) according to claim 11 or 12, and
- a measurement unit (101) for, in particular optically, analyzing samples (S) centrifuged by the centrifuge (50).

14. Analytical instrument (100) according to claim 13, **characterized in that**
- the measurement unit (101) and the centrifuge (50) are placed in a common housing (56).
